# EUROPÄISCHE PATENTANMELDUNG

(11) **EP 3 407 477 A1**
(43) Veröffentlichungstag der Anmeldung: **28.11.2018**
(21) Anmeldenummer: 17172989.0
(22) Anmeldetag: 26.05.2017
(51) Int. Cl.: H02M 5/42, H05K 7/20, H02M 1/32

(54) **VORRICHTUNG ZUM ENTLADEN VON EINEM GLEICHSPANNUNGSZWISCHENKREISKONDENSATOR**

(71) Anmelder: Siemens Aktiengesellschaft, 80333 München (DE)
(72) Erfinder: Lange, Robert, 08451 Crimmitschau (DE); Strobelt, Holger, 08328 Stützengrün (DE)

(57) **Zusammenfassung**

Die Erfindung betrifft eine Entladevorrichtung (1) zur Entladung von elektrischer Energie eines Schaltkreises (2) eines elektrischen Umrichters (3), umfassend eine Erregereinheit (5), welche mit dem Schaltkreis (2) elektrisch verbindbar ist, und umfassend einen elektrisch leitfähigen Körper (7), welcher als Kühlkörper (8) ausgebildet ist, wobei die Erregereinheit (5) und der elektrisch leitfähige Körper (7) derart zusammenwirken, dass im Betrieb der Entladevorrichtung (1) von der Erregereinheit (5) mittels der elektrischen Energie aus dem Schaltkreis (2) ein elektromagnetisches Wechselfeld erzeugt wird, und wobei mittels des elektromagnetischen Wechselfelds ein Wirbelstrom in dem elektrisch leitfähigen Körper (7) derart induziert wird, dass die im elektrisch leitfähigen Körper (7) erzeugte elektrische Energie in Wärmeenergie umgewandelt wird. Weiterhin betrifft die Erfindung einen elektrischen Umrichter (3) mit der erfindungsgemäßen Entladevorrichtung (1).

## Beschreibung

Die Erfindung betrifft eine Entladevorrichtung zur Entladung von elektrischer Energie eines Schaltkreises eines elektrischen Umrichters. Weiterhin betrifft die Erfindung einen elektrischen Umrichter mit der erfindungsgemäßen Entladevorrichtung.

Elektrische Geräte und Systeme im industriellen Umfeld erzeugen oftmals betriebsbedingt, und zum Teil auch technisch unerwünscht, überschüssige elektrische Energie, wobei genau zum Zeitpunkt der Erzeugung ein elektrisches Bauelement verfügbar sein muss, welches die überschüssige elektrische Energie aufnimmt bzw. verbraucht. Betroffene elektrische Schaltkreise der elektrischen Geräte und Systeme entladen demnach ihre überschüssige elektrische Energie in ein derartiges elektrisches Bauelement.

Insbesondere bei elektrischen Antriebssystemen, beispielsweise für Industrieanlagen oder für elektrisch betreibbare Fahrzeuge, welche einen elektrischen Umrichter und eine oft rotierende elektrische Maschine aufweisen, erzeugen Bremsvorgänge an in diesem Fall generatorisch betriebenen elektrischen Maschinen elektrische Energie, welche umgehend verbraucht oder gespeichert werden muss, um eine Beschädigung oder Zerstörung des Antriebssystems zu verhindern.

Wird das elektrische Antriebssystem beispielsweise an einem elektrischen Netz betrieben, kann die überschüssige elektrische Energie in das elektrische Netz zurückgespeist werden, sofern auch der elektrische Umrichter für die Energierückspeisung ausgelegt ist. Oftmals kommen jedoch aus Kostengründen elektrische Umrichter zum Einsatz, welche in diesem Sinne nicht rückspeisefähig sind.

Elektrische Speicherelemente, wie z.B. Kondensatoren oder Akkumulatoren, können hier zur Aufnahme und Speicherung der überschüssigen elektrischen Energie vorgesehen sein. Stehen wirtschaftliche Aspekte für die Auswahl einer derartigen Lösung im Vordergrund, wie beispielsweise Beschaffungskosten bzw. Herstellungskosten in Verbindung mit einem ggf. erhöhten Wartungsaufwand, erscheint diese Lösung nicht immer attraktiv. Da industriell genutzte elektrische Speicherelemente in der Regel teuer und wartungsintensiv sind, kommen sie meist nur dann zum Einsatz, wenn beispielsweise ein Energiemanagement-Konzept dies als effizient erscheinen lässt.

Eine weitere bekannte und auch oft eingesetzte Lösung findet sich in der Umwandlung der überschüssigen elektrischen Energie mittels eines ohmschen Widerstandes, auch Bremswiderstand genannt, in Wärmeenergie. Derartige Bremswiderstände sind jedoch insbesondere für die Umwandlung hoher elektrischer Energiemengen in Wärmeenergie sehr kostenintensiv. Ferner erfordern Bremswiderstände, welche als Leistungswiderstände ausgeführt sind, einen hohen Platzbedarf in den elektrischen Geräten oder Systemen. Darüber hinaus muss eine sichere Entwärmung dieser Bremswiderstände vergleichsweise technisch aufwändig und teuer umgesetzt werden.

Bekannt ist ebenfalls, dass die überschüssige elektrische Energie auch genutzt werden kann, mittels des Prinzips einer Wirbelstrombremse einen Bremsvorgang von linear beweglichen oder rotierenden Bauelementen, beispielsweise den Bremsvorgang an der elektrischen Maschine, zumindest zu unterstützen. Jedoch ist der Einsatz einer Wirbelstrombremse nur dann geeignet, wenn sich bewegliche Bauteile auch tatsächlich mit dieser Lösung abgebremst werden sollen. Abgesehen davon ist diese Art des Verbrauchs von überschüssiger elektrischer Energie nur mit vergleichsweise hohem mechanischem Aufwand durchführbar und erfordert ebenfalls einen hohen Platzbedarf.

Der Erfindung liegt daher die Aufgabe zugrunde, eine Entladevorrichtung zur Entladung von elektrischer Energie aus einem Schaltkreis bereitzustellen, welche im Vergleich zum Stand der Technik technisch aufwandsarm, kostengünstig und platzsparend ausgebildet ist.

Die Aufgabe wird durch eine Entladevorrichtung mit den in Anspruch 1 angegebenen Merkmalen gelöst. Ferner wird die Aufgabe durch einen elektrischen Umrichter nach Anspruch 13 gelöst.

Der Erfindung liegt die Erkenntnis zugrunde, dass elektrische Geräte und Systeme, beispielsweise elektrische Umrichter in elektrischen Antriebssystemen von industriellen Anlagen oder von Fahrzeugen, betriebsbedingt erzeugte und im Allgemeinen unerwünschte überschüssige elektrische Energie in deren Schaltkreisen aufweisen können, welche auch unter Inkaufnahme elektrischer Verluste in Wärmeenergie umgewandelt und von der Wärmequelle abgeführt werden muss. Bisherige Lösungen erfordern dazu eine oft technisch aufwändige Umsetzung, sind in der Regel kostenintensiv und erfordern einen meist hohen Platzbedarf.

Für die Lösung der Aufgabe wird eine Entladevorrichtung zur Entladung von elektrischer Energie eines Schaltkreises eines elektrischen Umrichters vorgeschlagen, umfassend eine Erregereinheit, welche mit dem Schaltkreis elektrisch verbindbar ist, und einen elektrisch leitfähigen Körper, welcher als Kühlkörper ausgebildet ist, wobei die Erregereinheit und der elektrisch leitfähige Körper derart zusammenwirken, dass im Betrieb der Entladevorrichtung von der Erregereinheit mittels der elektrischen Energie aus dem Schaltkreis ein elektromagnetisches Wechselfeld erzeugt wird, und wobei mittels des elektromagnetischen Wechselfelds ein Wirbelstrom in dem elektrisch leitfähigen Körper derart induziert wird, dass die im elektrisch leitfähigen Körper erzeugte elektrische Energie in Wärmeenergie umgewandelt wird.

Im Betrieb der Entladevorrichtung wird demnach die elektrische Energie, welche im mit der Entladevorrichtung verbundenen Schaltkreis je nach Betriebszustand überschüssig vorhanden ist, entladen. Dazu erzeugt die Erregereinheit aus der überschüssigen elektrischen Energie das elektromagnetische Wechselfeld, welches in dem vom Schaltkreis in vorteilhafter Weise galvanisch getrennten elektrisch leitfähigen Körper mittels der elektrischen Induktion den Wirbelstrom induziert. Dabei ist der elektrisch leitfähige Körper derart ausgebildet, dass er sich wie eine Induktionsspule verhält.

Der durch den elektrisch leitfähigen Körper fließende Wirbelstrom erwärmt den elektrisch leitfähigen Körper, welcher im Wesentlichen einen ohmschen Widerstand ausbildet. Die Erzeugung der Wärmeenergie des elektrisch leitfähigen Körpers bestimmt sich bis zu max. 1/3 der erzeugten gesamten Wärmeenergie im elektrisch leitfähigen Körper auch durch die Ummagnetisierungsverluste bzw. Hystereseverluste der im elektrisch leitfähigen Körper induzierten elektrischen Energie.

In besonders vorteilhafter Weise ist der elektrisch leitfähige Körper als Kühlkörper ausgelegt, welcher die erzeugte Wärmeenergie einerseits aufnehmen kann, andererseits aber auch weiterleiten bzw. ableiten kann. Somit entlädt die Entladevorrichtung die überschüssige elektrische Energie des Schaltkreises durch induktive Umwandlung der elektrischen Energie des Schaltkreises in Wärmeenergie im elektrisch leitfähigen Körper.

Vorteilhafte Ausgestaltungsformen des Energieversorgungssystems sind in den abhängigen Ansprüchen angegeben.

Bei einer ersten vorteilhaften Ausgestaltungsform der erfindungsgemäßen Entladevorrichtung weist die Erregereinheit eine Feldspule auf.

Mittels der Feldspule kann vorteilhaft platzsparend und kostengünstig das elektromagnetische Wechselfeld erzeugt werden, das im Betrieb der Entladevorrichtung den Wirbelstrom im elektrisch leitfähigen Körper erzeugt. Das elektrische Wechselfeld könnte auch durch einen sich bewegenden (rotierenden) Permanentmagnet erzeugt werden, dessen Bewegung vergleichsweise aufwändig mittels der überschüssigen elektrischen Energie des Schaltkreises erzeugt werden muss.

Bei einer weiteren vorteilhaften Ausgestaltungsform der erfindungsgemäßen Entladevorrichtung weist die Erregereinheit einen Kondensator auf, welcher mit der Feldspule elektrisch verbunden ist und welcher mit der Feldspule einen Resonanzschwingkreis bildet.

Durch den aus Feldspule und Kondensator gebildeten Resonanzschwingkreis wird zwischen dem elektrischen Feld des Kondensators und dem magnetischen Feld der Feldspule die vom Schaltkreis ausgehende überschüssige elektrische Energie periodisch ausgetauscht. Je nach Auslegung der Feldspule und des Kondensators kann das elektromagnetische Wechselfeld hochfrequent schwingend ausgebildet werden. Ein hochfrequent resonant schwingendes elektromagnetisches Wechselfeld ändert seine Stärke und Richtung schnell und beständig, wobei es sich vorteilhaft für eine schnelle und leistungsstarke Übertragung der elektrischen Energie von der Feldspule in den elektrisch leitfähigen Körper eignet.

Bei einer weiteren vorteilhaften Ausgestaltungsform der erfindungsgemäßen Entladevorrichtung weist die Erregereinheit einen ersten schaltbaren Leistungshalbleiter als eine Schaltvorrichtung auf und ist der erste schaltbare Leistungshalbleiter mit der Feldspule elektrisch verbunden.

Mittels des schaltbaren Leistungshalbleiters kann im Betrieb der Entladevorrichtung die Energiemenge der über die Feldspule in den elektrisch leitfähigen Körper induzierten elektrischen Energie und/oder die Frequenz des elektromagnetischen Wechselfeld der Feldspule vorteilhaft eingestellt werden.

Bei einer weiteren vorteilhaften Ausgestaltungsform der erfindungsgemäßen Entladevorrichtung weist die Erregereinheit 5 einen zweiten schaltbaren Leistungshalbleiter der Schaltvorrichtung auf, welcher mit dem ersten schaltbaren Leistungshalbleiter elektrisch verschaltet ist, und bilden beide schaltbaren Leistungshalbleiter einen elektrischen Brückenzweig einer elektrischen Brückenschaltung.

Mittels der schaltbaren Leistungshalbleiter, welche in der elektrischen Brückenschaltung als Brückenzweig angeordnet sind, ist im Betrieb der Entladevorrichtung eine verbesserte Einstellung der Energiemenge der über die Feldspule in den elektrisch leitfähigen Körper induzierten elektrischen Energie und/oder der Frequenz des elektromagnetischen Wechselfelds der Feldspule gegenüber dem alleinigen Einsatz des ersten schaltbaren Leistungshalbleiters möglich.

Bei einer weiteren vorteilhaften Ausgestaltungsform der erfindungsgemäßen Entladevorrichtung weist die Erregervorrichtung eine Ansteuereinheit auf, mittels der im Betrieb der Entladevorrichtung der erste schaltbare Leistungshalbleiter und, falls vorhanden, der zweite Leistungshalbleiter geschaltet wird.

Die Ansteuereinheit weist dazu insbesondere eine Recheneinheit auf, welche mittels eines Ansteuerverfahrens, wie dem der Pulsweitenmodulation, Schaltsignale zur Ansteuerung des oder der schaltbaren Leistungshalbleiter erzeugt. Dies verbessert im Betrieb der Entladevorrichtung die Einstellmöglichkeiten der Energiemenge der über die Feldspule in den elektrisch leitfähigen Körper induzierten elektrischen Energie und/oder der Frequenz des elektromagnetischen Wechselfelds der Feldspule in besonders vorteilhafter Weise.

Bei einer weiteren vorteilhaften Ausgestaltungsform der erfindungsgemäßen Entladevorrichtung ist die Feldspule eine Hochfrequenzspule, welche derart ausgebildet ist, dass im Betrieb der Entladevorrichtung ein Erregerstrom mit einer Frequenz von 20kHz bis zu 50kHz durch die Hochfrequenzspule fließt.

Diese besonders für einen hochfrequenten Stromfluss des Erregerstroms geeignete Hochfrequenzspule bildet in besonders vorteilhafter Weise das elektromagnetische Wechselfeld, welches als hochfrequentes elektromagnetisches Wechselfeld für die schnelle und leistungsstarke Übertragung der elektrischen Energie von der Feldspule in den elektrisch leitfähigen Körper vorgesehen ist.

Bei einer weiteren vorteilhaften Ausgestaltungsform der erfindungsgemäßen Entladevorrichtung ist der elektrisch leitfähige Körper einteilig oder mehrteilig ausgebildet, wobei der mehrteilig ausgebildete elektrisch leitfähige Körper eine Materialeinlage aus ferromagnetischem Material aufweist.

Bei der einteiligen Ausbildung des elektrisch leitfähigen Körpers kann mit dem Einsatz nur eines Materials, welches neben metallischen Eigenschaften insbesondere magnetisierbare Eigenschaften aufweisen muss, eine kostengünstige und von Seiten der Herstellung aufwandsarme Lösung erreicht werden. Je besser die magnetischen Eigenschaften des Materials sind, beispielsweise die von Eisen bzw. Eisenverbindungen, umso mehr Wärmeenergie kann aus der in den elektrisch leitfähigen Körper induzierten elektrischen Energie umgewandelt werden, was die Entladung der elektrischen Energie des Schaltkreises vorteilhaft verbessert.

Ist die mehrteilige Ausbildung des elektrisch leitfähigen Körper vorgesehen, kann die Materialeinlage aus ferromagnetischem Material an einer bevorzugten Stelle des elektrisch leitfähigen Körpers die Wirbelströme und damit die erzeugte Wärmeenergie bündeln, wobei dann andere Teile des elektrisch leitfähigen Körpers nur gering oder nicht magnetisierbares Material, wie beispielsweise das paramagnetische Aluminium, aufweisen können.

Bei einer weiteren vorteilhaften Ausgestaltungsform der erfindungsgemäßen Entladevorrichtung weist der elektrisch leitfähige Körper Kühlrippen auf.

Kühlrippen sind hier besonders geeignet, die aus der induzierten elektrischen Energie im elektrisch leitfähigen Kühlkörper umgewandelte und vom elektrisch leitfähigen Kühlkörper aufgenommene Wärmeenergie an ein den elektrisch leitfähigen Kühlkörper umgebendes flüssiges oder gasförmiges Medium abzuleiten.

Bei einer weiteren vorteilhaften Ausgestaltungsform der erfindungsgemäßen Entladevorrichtung ist der elektrisch leitfähige Körper zumindest Teil eines Gehäuses für den elektrischen Umrichter und/oder ist der elektrisch leitfähige Körper zumindest Teil eines externen Bauelements außerhalb des elektrischen Umrichters.

Das Gehäuse, wie das eines elektrischen Umrichters, bietet im Allgemeinen ein im Vergleich zu herkömmlichen Kühlkörpern derartiger elektrischer Umrichter größeres und insbesondere systemimmanent vorhandenes Volumen für die Aufnahme der im Betrieb der Entladevorrichtung durch Induktion von elektrischer Energie in das Gehäuse erzeugten Wärmeenergie. Auch ist insbesondere die nach außen gerichtete Fläche des Gehäuses in vorteilhafter Weise für die Ableitung der von Gehäuse aufgenommenen Wärmeenergie geeignet.

Ferner kann der elektrisch leitfähige Körper als externes Bauelement außerhalb des elektrischen Umrichters zumindest als ein Teil eines Schaltschrankes, insbesondere als ein Teil einer Schaltschrankwand, ausgebildet sein. In diesem Fall wird die elektrische Energie beispielsweise in die Schaltschankwand induziert, dort in Wärmeenergie umgewandelt und von der Wärmequelle abgeleitet.

Bei einer weiteren vorteilhaften Ausgestaltungsform der erfindungsgemäßen Entladevorrichtung besteht der elektrisch leitfähige Körper teilweise oder vollständig aus einem elektrisch leitfähigen Kunststoff.

Auch Kunststoffe können beispielsweise als ein Materialverbundstoff ausgebildet werden, welcher elektrisch leitfähige und auch magnetische Eigenschaften aufweist. Derartige Kunststoffe sind ebenfalls dazu vorgesehen, nach Induktion der elektrischen Energie in den elektrisch leitfähigen Kunststoff und der Umwandlung in Wärmeenergie die damit erzeugte Wärmemenge aufzunehmen und abzuleiten. Kunststoffe haben meist den Vorteil gegenüber anderen elektrisch leitfähigen Materialien, dass sie jeweils ein geringeres Gewicht bei vergleichsweise gleicher Stabilität aufweisen.

Bei einer weiteren vorteilhaften Ausgestaltungsform der erfindungsgemäßen Entladevorrichtung ist unmittelbar zwischen der Feldspule der Erregereinheit und dem elektrisch leitfähigen Körper ein elektrisch nichtleitender und/oder thermisch isolierender Trennkörper vorgesehen.

Der beispielsweise elektrisch nichtleitende Trennkörper kann als Gehäuse für den elektrischen Umrichter ausgebildet sein, der elektrisch leitfähige Körper ist dann beispielsweise als externes Bauelement Teil der Schaltschrankwand. Damit wird die elektrische Energie nicht in das Gehäuse des elektrischen Umrichters sondern nahezu vollständig in die Schaltschrankwand induziert, dort in Wärmeenergie umgewandelt und abgeleitet. In diesem Fall schützt das elektrisch nichtleitende Gehäuse beispielsweise das Innere des elektrischen Umrichters vor Verschmutzung und Feuchtigkeit.

Für die Lösung der Aufgabe wird weiterhin ein Umrichter vorgeschlagen, welcher eine erfindungsgemäße Entladevorrichtung und einen Schaltkreis umfasst.

Der elektrische Umrichter kann beispielsweise bei einer Notabschaltung einen Betriebszustand aufweisen, welche eine schnelle und zuverlässige Entladung der elektrischen Energie zumindest von einem seiner Schaltkreise erforderlich macht. Dies kann insbesondere dann notwendig werden, wenn der elektrische Umrichter am Schaltkreis auch nach der Notanschaltung weiterhin überschüssige elektrische Energie aufweist bzw. von außerhalb mittels seiner elektrischen Verbindungen weiter mit dann überschüssiger elektrischer Energie gespeist wird. Mittels der erfindungsgemäßen Entladevorrichtung ist der Schaltkreis solang entladbar, bis die elektrische Energie auf ein für Personen und elektrische Geräte bzw. Bauteile ungefährliches Maß gesunken ist.

Bei einer ersten vorteilhaften Ausgestaltungsform des erfindungsgemäßen Umrichters ist der Umrichter als ein Frequenzumrichter ausgebildet, umfassend einen rückspeiseunfähigen Gleichrichter, welcher eingangsseitig mit einem ersten elektrischen Netz verbindbar ist und ausgangsseitig mit einem Gleichspannungszwischenkreis verbunden ist, und umfassend einen rückspeisefähigen Wechselrichter, welcher eingangsseitig mit dem Gleichspannungszwischenkreis verbunden ist und ausgangsseitig mit einem zweiten elektrischen Netz oder einer elektrischen Maschine verbindbar ist.

Die Entladevorrichtung ist insbesondere für einen Frequenzumrichter besonders vorteilhaft geeignet, welcher im Betrieb zwar mittels des ersten elektrischen Netzes die elektrische Maschine oder das zweite elektrisches Netz mit elektrischer Energie versorgt, jedoch wegen seinem rückspeiseunfähigen Gleichrichter keine, beispielsweise von der elektrischen Maschine generatorisch erzeugte, elektrische Energie in das erste elektrische Netz zurückspeisen kann.

Bei einer weiteren vorteilhaften Ausgestaltungsform des erfindungsgemäßen Umrichters ist der Schaltkreis als Gleichspannungszwischenkreis ausgebildet.

Der rückspeisefähige Wechselrichter kann im Betrieb beispielsweise die von der elektrischen Maschine generatorisch erzeugte elektrische Energie in den Gleichspannungszwischenkreis zurückspeisen. An diesem Schaltkreis ist eine Entladung der dann von dem rückspeiseunfähigen Gleichrichter nicht in das erste elektrische Netz weiterleitbare überschüssige elektrischen Energie mittels der Entladevorrichtung vorgesehen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine erste schematische Darstellung der erfindungsgemäßen Entladevorrichtung,
- FIG 2: eine zweite schematische Darstellung der erfindungsgemäßen Entladevorrichtung nach FIG 1 mit einem elektrischen Umrichter,
- FIG 3: eine dritte schematische Darstellung der erfindungsgemäßen Entladevorrichtung nach FIG 1 mit dem elektrischen Umrichter nach FIG 2 und
- FIG 4: eine vierte schematische Darstellung der erfindungsgemäßen Entladevorrichtung nach FIG 1 mit dem elektrischen Umrichter nach FIG 2 oder FIG 3.

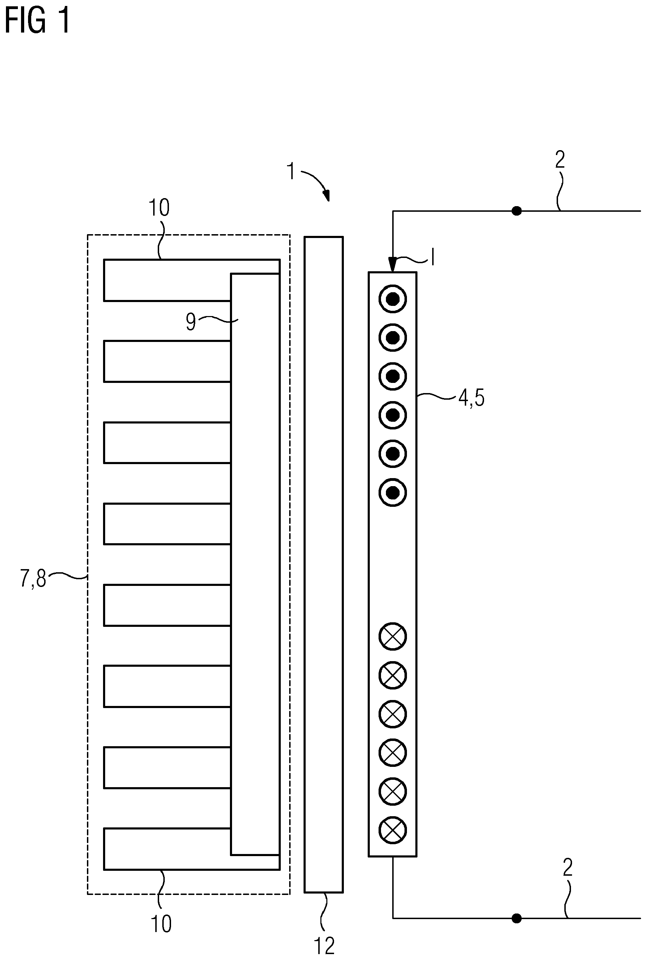

Die FIG 1 zeigt eine erste schematische Darstellung der erfindungsgemäßen Entladevorrichtung 1. Ein Schaltkreis 2 ist mit einer Feldspule 4 einer Erregereinheit 5 der Entladevorrichtung 1 elektrisch verbunden. Im Betrieb der Entladevorrichtung 1 weist der Schaltkreis 2 überschüssige elektrische Energie auf, aus welcher mittels eines Erregerstroms I, insbesondere mittels eines hochfrequenten Erregerstroms I, ein elektromagnetisches Wechselfeld in der Feldspule 4 erzeugt wird.

Dieses elektromagnetische Wechselfeld wiederum erzeugt mittels elektrischer Induktion in einem elektrisch leitfähigen Körper 7, im Ausführungsbeispiel der FIG 1 vorteilhaft in einer ferromagnetisches Material aufweisenden Materialeinlage 9 des elektrisch leitfähigen Körpers 7, einen Wirbelstrom. Dieser Wirbelstrom bewirkt, dass in dem elektrisch leitfähigen Körper 7 bzw. der Materialeinlage 9 die induzierte elektrische Energie in Wärmeenergie umgewandelt wird.

Der elektrisch leitfähigen Körper 7 der Entladevorrichtung 1 ist als Kühlkörper 8 ausgebildet und weist in FIG 1 Kühlrippen 10 auf. Der als Kühlkörper 8 ausgebildete elektrisch leitfähige Körper 7 kann somit im Betrieb der Entladevorrichtung 1 nicht nur aus induzierter elektrischer Energie erzeugte Wärmeenergie aufnehmen sondern auch an ein im Allgemeinen gasförmiges oder flüssiges Umgebungsmedium ableiten.

Unmittelbar zwischen der Feldspule 4 und dem elektrisch leitfähigen Körper 7 ist im Anwendungsbeispiel der FIG 1 ein elektrisch nichtleitender und thermisch isolierender Trennkörper 12 angeordnet. Während der elektrischen Induktion wird in diesem Trennkörper 12 aufgrund seiner nichtleitenden Eigenschaft keine elektrische Energie induziert. Da der Trennkörper 12 im Anwendungsbeispiel auch thermisch isolierende Eigenschaften aufweist, wird eine zusätzliche Erwärmung beispielsweise der Erregereinheit 5, hier insbesondere ihrer Feldspule 4, durch die in dem elektrisch leitfähigen Körper 7 erzeugte Wärmeenergie weitgehend vermieten.

Darüber hinaus ist der Trennkörper 12 auch vorteilhaft als Umhausung geeignet, beispielsweise um die Erregereinheit 5 vor Verschmutzung und Feuchtigkeit zu schützen.

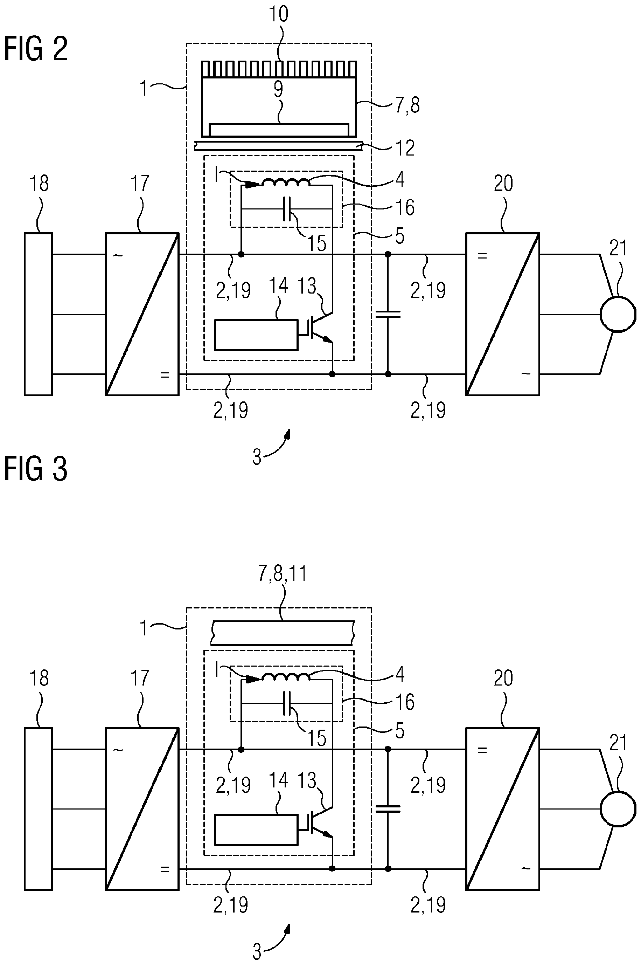

In FIG 2 wird eine zweite schematische Darstellung der erfindungsgemäßen Entladevorrichtung 1 nach FIG 1 mit einem elektrischen Umrichter 3 gezeigt.

Der elektrische Umrichter 3 ist beispielsweise als ein Frequenzumrichter ausgebildet und weist einen rückspeiseunfähigen Gleichrichter 17 auf, welcher eingangsseitig mit einem ersten elektrischen Netz 18 verbunden ist und ausgangsseitig mit einem Gleichspannungszwischenkreis 19 als Schaltkreis 2 verbunden ist. Ferner weist der elektrische Umrichter 3 einen rückspeisefähigen Wechselrichter 20 auf, welcher eingangsseitig mit dem Gleichspannungszwischenkreis 19 als Schaltkreis 2 verbunden ist und ausgangsseitig mit einer elektrischen Maschine 21 verbunden ist.

Die Feldspule 4 und ein Kondensator 15, welche gemeinsam mittels einer elektrischen Parallelschaltung einen Resonanzschwingkreis 16 bilden, sind einerseits mit einer ersten Phase des Gleichspannungszwischenkreises 19 elektrisch verbunden und andererseits mit einem ersten schaltbaren Leistungshalbleiter 13 elektrisch verbunden. Ferner ist der erste schaltbare Leistungshalbleiter 13 mit einer zweiten Phase des Gleichspannungszwischenkreises 19 elektrisch verbunden.

Eine Ansteuereinheit 14 steuert im Betrieb der Entladevorrichtung 1 den ersten schaltbaren Leistungshalbleiter 13 als eine Schaltvorrichtung.

Die Ansteuereinheit 14 kann eine Recheneinheit aufweisen (in FIG 2 nicht gezeigt), welche mittels eines Ansteuerverfahrens, wie dem der Pulsweitenmodulation, Schaltsignale zur Ansteuerung des ersten schaltbaren Leistungshalbleiters 13 erzeugt.

Der Resonanzschwingkreis 16 mit der Feldspule 4 und dem Kondensator 15, der erste schaltbare Leistungshalbleiter 13 und die Ansteuereinheit 14 bilden in FIG 2 die Erregereinheit 5.

Im Betrieb der Entladevorrichtung 1 weist der Schaltkreis 2 nun überschüssige elektrische Energie auf, aus welcher mittels des Erregerstroms I das elektromagnetische Wechselfeld in der Feldspule 4 erzeugt wird.

Das elektromagnetische Wechselfeld wiederum erzeugt mittels elektrischer Induktion in dem elektrisch leitfähigen Körper 7, im Ausführungsbeispiel der FIG 1 und der FIG 2 vorteilhaft in der ferromagnetisches Material aufweisenden Materialeinlage 9 des elektrisch leitfähigen Körpers 7, den Wirbelstrom. Der Wirbelstrom bewirkt, dass in dem elektrisch leitfähigen Körper 7 bzw. der Materialeinlage 9 die induzierte elektrische Energie in Wärmeenergie umgewandelt wird.

Wie in FIG1 ist der elektrisch leitfähige Körper 7 der Entladevorrichtung 1 in FIG 2 ebenfalls als Kühlkörper 8 ausgebildet und weist Kühlrippen 10 auf.

Unmittelbar zwischen der Feldspule 4 und dem elektrisch leitfähigen Körper 7 ist in FIG 2, vergleichbar dem Anwendungsbeispiel der FIG 1, beispielhaft der elektrisch nichtleitende und thermisch isolierende Trennkörper 12 angeordnet. Während der elektrischen Induktion wird in diesem Trennkörper 12 aufgrund seiner nichtleitenden Eigenschaft keine elektrische Energie induziert. Da der Trennkörper 12 im Anwendungsbeispiel der FIG 1 ebenfalls thermisch isolierende Eigenschaften aufweisen kann, wird dann die zusätzliche Erwärmung der Erregereinheit 5, hier insbesondere der Feldspule 4, durch die in dem elektrisch leitfähigen Körper 7 erzeugte Wärmeenergie weitgehend vermieten.

Auch in FIG 2 ist wie in FIG 1 gezeigt der Trennkörper 12 vorteilhaft als Umhausung geeignet, beispielsweise um die Erregereinheit 5 vor Verschmutzung und Feuchtigkeit zu schützen.

Die FIG 3 visualisiert eine dritte schematische Darstellung der erfindungsgemäßen Entladevorrichtung 1 nach FIG 1 mit dem elektrischen Umrichter nach FIG 2.

Als Unterschied zur FIG 2 offenbart die FIG 3, dass im Betrieb der Entladevorrichtung 1 die überschüssige elektrische Energie des Gleichspannungszwischenkreises 19 als Schaltkreis 2 mittels der Erregereinheit 5 in den als ein Gehäuse 11 oder als Teil eines Gehäuses 11 des elektrischen Umrichters 3 ausgebildeten elektrisch leitfähigen Körper 7 induziert wird.

Das Gehäuse 11 als elektrisch leitfähiger Körper 7 ist im Anwendungsbeispiel der FIG 3 als Kühlkörper 8 ausgebildet.

Im Gegensatz zur FIG 1 und der FIG 2 ist in FIG 3 zwischen der Feldspule 4 der Erregereinheit 5 und dem elektrisch leitfähigen Körper 7 kein elektrisch nichtleitender und/oder thermisch isolierender Trennkörper 12 vorgesehen. Das Gehäuse 11 des elektrischen Umrichters 3 kann hier den elektrischen Umrichter 3 vor Verschmutzung und Feuchtigkeit schützen.

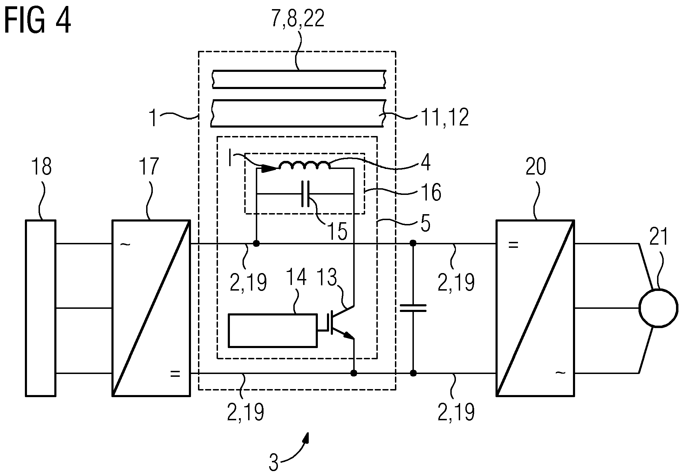

Mit FIG 4 wird eine vierte schematische Darstellung der erfindungsgemäßen Entladevorrichtung 1 nach FIG 1 mit dem elektrischen Umrichter nach FIG 2 oder FIG 3 gezeigt.

Als Unterschied zur FIG 2 und zur FIG 3 offenbart die FIG 4, dass im Betrieb der Entladevorrichtung 1 die überschüssige elektrische Energie des Gleichspannungszwischenkreises 19 als Schaltkreis 2 mittels der Erregereinheit 5 in den als ein externes Bauelement 22 oder als Teil eines externes Bauelements 22 außerhalb des elektrischen Umrichters 3 ausgebildeten elektrisch leitfähigen Körper 7 induziert wird. Das externe Bauelement 22 als elektrisch leitfähiger Körper 7 ist im Anwendungsbeispiel der FIG 4 als Kühlkörper 8 ausgebildet.

Beispielhaft ist als externes Bauelement 22 eine Schaltschrankwand eines Schaltschrankes vorsehbar, in welcher die überschüssige elektrische Energie des Gleichspannungskreises 19 induziert, in Wärmeenergie umgewandelt und beispielsweise an das gasförmige oder flüssige Umgebungsmedium abgeleitet wird.

Ein Gehäuse 11 des elektrischen Umrichters 3 ist dabei als elektrisch nichtleitender und/oder thermisch isolierender Trennkörper 12 ausgebildet. Es kann hier den elektrischen Umrichter 3 vor Verschmutzung und Feuchtigkeit schützen und verhindern, dass die im externen Bauteil 22 erzeugte Wärmeenergie in den elektrischen Umrichter 3 hineinwirkt.

## Patentansprüche

1. Entladevorrichtung (1) zur Entladung von elektrischer Energie eines Schaltkreises (2) eines elektrischen Umrichters (3), umfassend
- eine Erregereinheit (5), welche mit dem Schaltkreis (2) elektrisch verbindbar ist, und
- einen elektrisch leitfähigen Körper (7), welcher als Kühlkörper (8) ausgebildet ist,
wobei
- die Erregereinheit (5) und der elektrisch leitfähige Körper (7) derart zusammenwirken, dass im Betrieb der Entladevorrichtung (1) von der Erregereinheit (5) mittels der elektrischen Energie aus dem Schaltkreis (2) ein elektromagnetisches Wechselfeld erzeugt wird, und
- mittels des elektromagnetischen Wechselfelds ein Wirbelstrom in dem elektrisch leitfähigen Körper (7) derart induziert wird, dass die im elektrisch leitfähigen Körper (7) erzeugte elektrische Energie in Wärmeenergie umgewandelt wird.

2. Entladevorrichtung (1) nach Anspruch 1, wobei die Erregereinheit (5) eine Feldspule (4) aufweist.

3. Entladevorrichtung (1) nach Anspruch 2, wobei die Erregereinheit (5) einen Kondensator (15) aufweist, welcher mit der Feldspule (4) elektrisch verbunden ist und mit der Feldspule (4) einen Resonanzschwingkreis (16) bildet.

4. Entladevorrichtung (1) nach einem der Ansprüche 2 oder 3, wobei die Erregereinheit (5) einen ersten schaltbaren Leistungshalbleiter (13) als eine Schaltvorrichtung aufweist und wobei der erste schaltbare Leistungshalbleiter (13) mit der Feldspule (4) elektrisch verbunden ist.

5. Entladevorrichtung (1) nach Anspruch 4, wobei die Erregereinheit (5) einen zweiten schaltbaren Leistungshalbleiter der Schaltvorrichtung aufweist, welcher mit dem ersten schaltbaren Leistungshalbleiter (13) elektrisch verschaltet ist, und wobei beide schaltbaren Leistungshalbleiter einen elektrischen Brückenzweig einer elektrischen Brückenschaltung bilden.

6. Entladevorrichtung (1) nach einem der Ansprüche 4 oder 5, wobei die Erregervorrichtung (5) eine Ansteuereinheit (14) aufweist, mittels der im Betrieb der Entladevorrichtung (1) der erste schaltbare Leistungshalbleiter (13) und, falls vorhanden, der zweite schaltbare Leistungshalbleiter geschaltet wird.

7. Entladevorrichtung (1) nach einem der Ansprüche 2 bis 6, wobei die Feldspule (4) eine Hochfrequenzspule ist, welche derart ausgebildet ist, dass im Betrieb der Entladevorrichtung (1) ein Erregerstrom (I) mit einer Frequenz von 20 kHz bis zu 50kHz durch die Hochfrequenzspule fließt.

8. Entladevorrichtung (1) nach einem der vorhergehenden Ansprüche, wobei der elektrisch leitfähige Körper (7) einteilig oder mehrteilig ausgebildet ist und wobei der mehrteilig ausgebildete elektrisch leitfähige Körper (7) eine Materialeinlage (9) aus ferromagnetischem Material aufweist.

9. Entladevorrichtung (1) nach einem der vorhergehenden Ansprüche, wobei der elektrisch leitfähige Körper (7) Kühlrippen (10) aufweist.

10. Entladevorrichtung (1) nach einem der vorhergehenden Ansprüche, wobei der elektrisch leitfähige Körper (7) zumindest Teil eines Gehäuses (11) für den elektrischen Umrichter (3) ist und/oder der elektrisch leitfähige Körper (7) zumindest Teil eines externen Bauelements (22) außerhalb des elektrischen Umrichters (3) ist.

11. Entladevorrichtung (1) nach einem der vorhergehenden Ansprüche, wobei der elektrisch leitfähige Körper (7) teilweise oder vollständig aus einem elektrisch leitfähigen Kunststoff besteht.

12. Entladevorrichtung (1) nach einem der vorhergehenden Ansprüche, wobei unmittelbar zwischen der Feldspule (4) der Erregereinheit (5) und dem elektrisch leitfähigen Körper (7) ein elektrisch nichtleitender und/oder thermisch isolierender Trennkörper (12) vorgesehen ist.

13. Elektrischer Umrichter (3), umfassend eine Entladevorrichtung (1) nach einem der Ansprüche 1 bis 12 und einen Schaltkreis (2).

14. Elektrischer Umrichter (3) nach Anspruch 13, der als ein Frequenzumrichter ausgebildet ist,
umfassend
- einen rückspeiseunfähigen Gleichrichter (17), welcher eingangsseitig mit einem ersten elektrischen Netz (18) verbindbar ist und ausgangsseitig mit einem Gleichspannungszwischenkreis (19) verbunden ist und
- einen rückspeisefähigen Wechselrichter (20), welcher eingangsseitig mit dem Gleichspannungszwischenkreis (19) verbunden ist und ausgangsseitig mit einem zweiten elektrischen Netz oder einer elektrischen Maschine (21) verbindbar ist.

15. Elektrischer Umrichter (3) nach Anspruch 14, wobei der Schaltkreis (2) als Gleichspannungszwischenkreis (19) ausgebildet ist.
